# EUROPEAN PATENT SPECIFICATION

(11) **EP 0 855 533 B1**
(45) Date of publication and mention of the grant of the patent: **23.04.2003**
(21) Application number: 97310568.7
(22) Date of filing: 23.12.1997
(51) Int. Cl.: F16F 9/096, F16F 9/43

(54) **Shock absorber and method for charging hydraulic fluid to shock absorber**
Stossdämpfer und Methode zum Befüllen desselben mit Hydraulikflüssigkeit
Amortisseur et méthode pour le charger avec fluide hydraulique

(30) Priority: 27.12.1996 JP 35672296; 30.01.1997 JP 2986597
(43) Date of publication of application: 29.07.1998
(73) Proprietor: SHOWA CORPORATION, Gyoda-shi, Saitama (JP)
(72) Inventor: Ota, Masatoshi, Asaba-cho, Iwata-gun, Shizuoka (JP)
(74) Representative: Slingsby, Philip Roy

(56) References cited:
- FR-A- 1 331 846
- US-A- 3 331 601
- US-A- 3 771 626
- US-A- 3 798 744
- US-A- 4 226 408

## Description

The present invention relates to a shock absorber to be used for motorcycles or automatic four-wheel vehicles, and relates more particularly to a single-tube type shock absorber.

As a conventional single -tube type shock absorber in accordance with the preamble of claims 1 and 7, there is known, as disclosed in Japanese Utility Model Application Laid-Open (JP-U) No. 2-59333, a shock absorber in which a hydraulic fluid is filled within a cylinder made of a single tube, a piston rod is inserted into the cylinder, a piston having a damping force generating mechanism is provided at an end section of this piston rod, the inside of the cylinder is divided into a piston-side chamber and a rod-side chamber by this piston, a reserver case is fixed to the outer periphery of the cylinder, the inside of the reserver case is divided into an inside volume compensation fluid chamber and an outside gas chamber by a bladder to constitute a reserver chamber, and the cylinder is formed with through-holes for communicating between a fluid chamber of the reserver chamber and the piston-side chamber.

According to the above-described known shock absorber structure, it is possible to design the whole length of the shock absorber to be short in the single-tube type shock absorber by disposing the reserver chamber in parallel with the cylinder.

However, according to this known structrue, since the bladder for constituting the reserver chamber is of a right circular cylindrical shape, the bladder is sucked into an aperture section of the through-holes for communicating between the fluid chamber of the reserver chamber and the piston-side chamber of the cylinder in the most extended state of the shock absorber. Therefore, there occurs a problem that the bladder is damaged by a mark of the aperture section made on the inner peripheral surface of the bladder. Further, even after the shock absorber has shifted from the most extended state to a compresses state, the bladder is still kept sucked against the aperture section of the through-holes, so that the extension and compression movement of the bladder is hindered and this causes a trouble in the operation of the shock absorber.

Particularly, this phenomenon becomes more extreme when the hydraulic fluid within the cylinder becomes depleted due to extended usage of the shock absorber or when the volume of the hydraulic fluid within the cylinder has decreased due to a drop in the temperature of the hydraulic fluid in a cold environment.

Further, according to the above-described known shock absorber when the bladder is inserted into an outer periphery of the cylinder along an axial direction of the cylinder from a closed end side of the cylinder, seal sections at both ends of the bladder are expanded by the outer periphery of the cylinder. Therefore, the seal sections of the bladder are often damaged by the aperture section of the through-holes when they pass through the through-holes of the cylinder.

In Japanese Utility Model Application Laid-Open (JP-U) No. 2-58140, there is disclosed a shock absorber in which has been designed so that the seal sections of the bladder are not damaged when the bladder is inserted into the outer periphery of the cylinder of the bladder with such an arrangement that the aperture section at the bladder of the through-holes formed on the cylinder has been beveled. However, even in this case, since the seal sections of the bladder pass through the aperture section of the through-holes in the state that the seal sections of the bladder are expanded by the outer periphery of the cylinder, a damage occurs on the inner periphery of the seal sections.

The present invention aims at least partially to overcome these problems of the prior art and aims to provide a shock absorber of which whole length can be set short, of which operation can be maintained in satisfactory conditions, and which can prevent a damaging of a bladder that constitutes a reserver chamber.

Further, it is an aim of a preferred aspect of the present invention to provide a shock absorber which can avoid damaging in particular seal sections, of a bladder that constitutes a reserver chamber.

It is a further aim of the present invention to provide a method for charging a hydraulic fluid into a shock absorber which can securely prevent a mixing of air into a hydraulic fluid charged into a volume compensation fluid chamber of a reserver chamber.

According to the present invention, there is provided a shock absorber of a single-tube type, the shock absorber comprising a cylinder filled with a hydraulic fluid, a piston rod inserted into said cylinder, a piston having a damping force generating mechanism provided at an end section of the piston rod, the inside of said cylinder being divided into a piston-side chamber and a rod-side chamber by the piston, and a reserver case fixed to the outer periphery of said cylinder, the inside of said reserver case being divided into an inside volume compensation fluid chamber and an outside gas chamber by a cylindrical bladder to define a reserver chamber, said cylinder being formed with through-holes for communicating between said volume compensation fluid chamber of said reserver chamber and said piston-side chamber,
characterised in that the said bladder is in a barrel shape in its molded state and said volume compensation fluid chamber of said reserver chamber is structured so that said bladder remains in a barrel shape when said shock absorber is in the most extended state.

Preferably, a drain bolt in the cylinder is provided for adjusting the quantity of the hydraulic fluid within the cylinder from the outside.

Preferably, the bladder has ribs provided in projection on its inner peripheral surface.

Preferably, the seal sections having a smaller diameter than the outer diameter of the cylinder are formed on both end sections of the bladder for being in contact with the outer peripheral surface of the cylinder and a ring-shaped groove extending in a direction at a right angle with an axial line of the cylinder through through-holes is formed on the outer peripheral surface of the cylinder.

Preferably, a stopper section for stopping one end section of the reserver case is formed on the outer periphery of the cylinder, a thick fillet section is formed at a closed end side, seal sections having a smaller diameter than the outer diameter of the cylinder are formed in expansion on both ends sections of the bladder for being in contact with the outer peripheral surface of the cylinder , and a stopper section is provided at the other end section of the reserver case for positioning the reserver case in an axial direction and for stopping the movement of the reserver case by being brought into contact with a bolt inserted and fixed into the thick filet section of the cylinder in a radial direction.

More preferably, the bolt is a drain bolt for enabling the hydraulic fluid within the cylinder to be exhausted.

The present invention, further provides a method for charging a hydraulic fluid into a shock absorber, in which the shock absorber comprises a piston connected to one end portion of a piston rod and having a damping force generating mechanism, the piston being disposed slidably within a cylinder, and a reserver chamber is disposed on the outer periphery of said cylinder, the inside of said reserver chamber being divided by a bladder into a volume compensation fluid chamber for communicating to the inside of said cylinder through through-holes and a gas chamber,
wherein the method comprises the step of:
said hydraulic fluid is charged into said cylinder and said volume compensation fluid chamber,
the method being characterised by the steps of:
   (a) first, said hydraulic fluid is charged into said cylinder both in a state that said gas chamber of said reserver chamber is pressurised and in a state that said bladder is brought into a close contact with the outer peripheral surface of said cylinder, and
   (b) next, said hydraulic fluid within said cylinder is guided and charged into said volume compensation fluid chamber through said through-holes by the operation of the negative pressure within said volume compensation fluid chamber when said bladder returns to its barrel-shaped standard molded state when said gas chamber is at atmospheric pressure, the bladder remaining barrel-shaped when the shock absorber is in its most extended state.

The shock absorber embodying the present invention may have the following operation and advantages.

Since the reserver chamber is disposed on the outer periphery of the cylinder and is also disposed in parallel with the cylinder, the whole length of the shock absorber can be designed to be short even if the shock absorber is a single-tube type.

Further, since the volume compensation fluid chamber is secured inside the bladder in the most extended state of the shock absorber, the bladder will never be sucking against the aperture section of the through-hole formed on the lower side wall of the cylinder. Therefore, it is possible to avoid an occurrence of such a phenomenon that the bladder is damaged by a mark of the aperture section made on the inner peripheral surface of the bladder due to the sucking of the bladder by the aperture section of the through-holes. As a result, it becomes possible to maintain the operation of the shock absorber in satisfactory conditions and to prevent damage to the bladder of the reserver chamber.

Further, since the volume compensation fluid chamber is secured in the most extended state, the area of the bladder receiving a pressure is large at the time of being compressed from the most extended state. Therefore, the durability of the bladder is increased without a local application of pressure to a portion facing the through-holes, unlike the bladder of a right circular cylinder shape which is closely adhered to the outer peripheral surface of the cylinder at the most extended state.

Further, since the bladder is formed in approximately a barrel shape at the molding time and since the volume compensation fluid chamber is constituted so that the bladder forms that barrel shape when the shock absorber is in the most extended state, the pressure-receiving area becomes larger as compared with a bladder of a right circular cylindrical shape for the same volume of the volume compensation fluid and the coefficient of cubic expansion of the bladder becomes smaller so that the durability of the bladder is improved.

Further, since the bladder is in an approximately barrel shape, the pressure resistance becomes larger to enable a high-pressure gas to be sealed in it.

In accordance with a preferred aspect of the invention, by loosening the drain bolt, it becomes possible to exhaust the hydraulic fluid corresponding to a volume expansion of the bladder which has expanded by the insertion of the rod guide into the cylinder, and thus the bladder can be set to its standard molded state.

In accordance with a further preferred aspect of the invention, since ribs are provided in projection on an inner peripheral surface of the bladder, when, for example, the hydraulic fluid within the cylinder becomes depleted due to extended usage of the shock absorber and the fluid chamber of the reserver chamber cannot maintain the barrel shape at the time of the most extension of the shock absorber, even if the bladder tries to have a contact with the outer peripheral surface of the cylinder, the projected ribs are brought into contact with the outer peripheral surface of the cylinder. As a result, it becomes possible to avoid damage to the bladder or an operational failure of the shock absorber because the inner peripheral surface of the bladder is not. sucked against the aperture section of the through-holes of the cylinder. Thus, the ribs of the bladder achieve a fail-safe function.

In accordance with a further preferred aspect of the invention, since the ring-shaped groove passing through the through-holes has a smaller size than the size of the outer peripheral surface of the cylinder, at the time of inserting the bladder in the axial direction of the cylinder, the expanded size of the seal sections of the bladder is restricted when the seal sections reach the ring-shaped groove, and the seal sections are not damaged by the aperture section of the through-holes when passing through the through-holes.

In accordance with yet a further preferred aspect of the invention, the seal sections of the bladder maintain the volume compensation fluid chamber of the reserver chamber in a liquid tight manner and are compressed in a radial direction by the reserver case. The seal sections fix the reserver case to the cylinder by this friction, restrict the move of the reserver case in the axial direction, and stop the rotation. Therefore, by stopping one end portion of the reserver case with the stopper section of the cylinder and by bringing the engagement portion of the other end side into contact with a bolt inserted and fixed into the thick fillet section of the cylinder, the reserver case can be fixed to the cylinder securely even if the bolt is one having a simple structure.

In accordance with a still further preferred aspect of the invention, since the bolt for ensuring the fixing of the reserver case is a drain bolt, the number of parts can be decreased, thus further simplifying the fixing structure of the reserver case.

If the hydraulic fluid is charged into the cylinder and the volume compensation fluid chamber of the reserver chamber by setting the bladder in a standard molded state, the air within the volume compensation fluid chamber is not easily exhausted through the through-holes through which the hydraulic fluid is guided into the volume compensation fluid chamber so that a large quantity of air is easily mixed into the hydraulic fluid guided into the volume compensation fluid chamber. In contrast to this, according to the present invention, at first, the hydraulic fluid is charged into the cylinder in the state that the bladder is closely contacted to the outer peripheral surface of the cylinder, then the bladder is returned to the standard molded state, and the hydraulic fluid within the cylinder is guided into the volume compensation fluid chamber by the negative pressure of the volume compensation fluid chamber. Therefore, there exists almost no air in the volume compensation fluid chamber before guiding the hydraulic fluid. Thus, it is possible to securely prevent a mixing of air into the hydraulic fluid guided into the volume compensation fluid chamber.

The present invention will be understood more fully from the detailed description given hereinbelow and from the accompanying drawings of the preferred embodiments of the invention, which are given by way of example only, and are not intended to limit the present invention.

In the drawings:
Fig. 1 is a cross sectional diagram for showing a reaction unit of a motorcycle to which one mode of implementation of the shock absorber relating to the present invention is applied;
Fig. 2 is a side view of a part of Fig. 1;
Fig. 3 is a side view of a part of a cylinder in Fig. 1;
Fig. 4 is a top plan view for showing a reserver case in Fig. 1;
Fig. 5 is a cross sectional diagram cut along a V-V line in Fig. 4;
Fig. 6 is a cross sectional diagram for showing a bladder in Fig. 1; and
Fig. 7 is a cross sectional view cut along a VII-VII line in Fig. 6.

A mode of implementation of the present invention will be explained below.

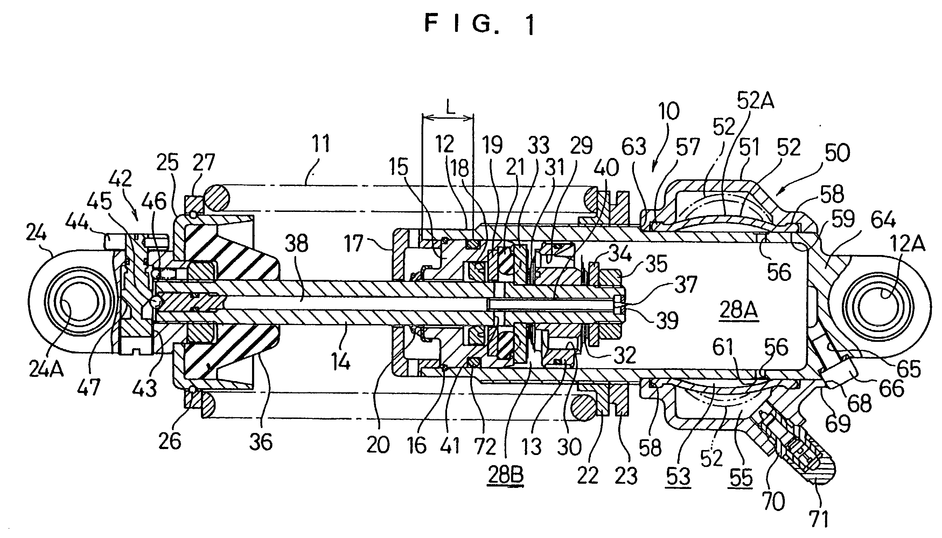

As shown in Fig. 1, a shock absorber 10 to be used for a motorcycle is integrated with a suspension spring 11. The suspension spring 11 absorbs an impulsive force from the road surface and the shock absorber 10 controls an oscillation of the cushion unit. Fig. 1 shows the shock absorber 10 in its most extended state.

The shock absorber 10 has a hydraulic fluid charged into a cylinder 12 of a cylindrical shape having a bottom made of a single tube, and a piston 13 is disposed slidably in the cylinder 12, with the piston 13 connected to one end of a piston rod 14.

At an end section of an aperture side of the cylinder 12, a rod guide 15 is fixed by a stopper ring 16, and a cap 17 is engaged to cover the rod guide 15. An oil seal 18 is mounted on the guide rod 15 by using a washer 19, and a dust seal 20 is mounted at a side of the cap 17. The oil seal 18 and the dust seal 20 are brought into contact with the outer peripheral surface of the piston rod 14, and the cylinder 12 is maintained in a liquid tight manner by the oil seal 18. Further, a rebound stopper 21 is mounted on the rod guide 15 adjacent to the washer 19.

On the other hand, a spring adjuster 22 and an adjusting nut 23 are spirally mounted on the outer periphery of the cylinder 12. A metal joint 24 is fixed to the other end of the piston rod 14, a spring sheet receiver 25 is fixed to the metal joint 24, and a spring sheet 27 is mounted on the spring sheet receiver 25 via a stopper ring 26. The suspension spring 11 is disposed between the spring sheet 27 and the spring adjuster 22. An initial load of the suspension spring 11 is adjusted by moving the spring adjuster 22 in the axial direction of the cylinder 12 by rotating the adjusting nut 23.

Bearings 24A are provided in the metal joint 24, and the bearings 24A are supported by a body frame. Also, bearings 12A are provided at the closed end side of the cylinder 12, and these bearings 12A are supported by a swing arm (not shown) for supporting the rear wheels in a swingable manner.

The piston 13 is connected to one end of the piston rod 14, and divides the inside of the cylinder 12 into a rod-side chamber 28B for accommodating the piston rod 14 and a piston-side chamber 28A for not accommodating the piston rod 14. The piston 13 is formed with a plurality of compression side flow paths 29 and extension side flow paths 30 alternately piercing there-through around the piston rod 14. Further, at one side surface of the piston 13, a compression side disk valve 31 for enabling the compression side flow paths 29 to be closed is provided, and an extension side disk valve 32 for enabling the extension side flow paths 30 to be closed is disposed at the other side surface of the piston 13. The piston 13, the compression side disk valve 31, the extension side disk valve 32 and valve stoppers 33 and 34 disposed on the rear surface side of the compression side disk valve 31 and the extension side disk valve 32 respectively, are fixed to one end section of the piston rod 14 by a nut 35 and are thereby integrated together.

The valve stopper 33 is brought into contact with the rebound stopper 21 of the rod guide 15 to restrict the most extended stroke of the shock absorber 10. A rubber stopper 36 is mounted on the spring sheet receiver 25, and when the rubber stopper 36 is brought into contact with the cap 17 of the cylinder 12, the most compressed stroke of the shock absorber 10 is restricted.

In the compression process of the shock absorber 10, when the relative speed of the piston 13 to the cylinder 12 is at a medium speed level, the hydraulic fluid within the piston-side chamber 28A passes through the compression side flow paths 29, deforms the compression side disk valve 31, and flows into the rod-side chamber 28B. When the hydraulic fluid has deformed the compression side disk valve 31, a damping force at the time of the compression side medium speed is generated.

In the extension process of the shock absorber 10, when the relative speed of the piston 13 to the cylinder 12 is at a medium speed level, the hydraulic fluid within the rod-side chamber 28B passes through the extension side flow paths 30, deforms the extension side disk valve 32, and flows into the piston-side chamber 28A. When the hydraulic fluid has deformed the extension side disk valve 32, a damping force at the time of the extension side medium speed is generated.

The above-described compression side disk valve 31, the extension side disk valve 32 and a needle valve 37 to be described later comprise a damping force generating mechanism. The needle valve 37 is formed at a front end section of an adjusting rod 38 inserted within the piston rod 14 having a hollow shape, and forms an orifice in a valve sheet 39 fixed to one end portion of the piston rod 14. The piston rod 14 is provided with a piercing hole 41 connecting to a hollow section 40, and the piston-side chamber 28A and the rod-side chamber 28B within the cylinder 12 are communicated with each other through the piercing hole 41, the hollow section 40 and the orifice.

In the compression process and the extension process of the shock absorber 10, when the relative speed of the piston 13 to the cylinder 12 is low, the hydraulic fluid flows between the piston-side chamber 28A and the rod-side chamber 28B through the piercing hole 41, the hollow section 40 and the orifice. When the hydraulic fluid flows through the orifice formed by the needle valve 37, a damping force at the time of the compression side low speed or the extension side low speed is generated.

The area of the flow path of the orifice formed by the needle valve 37 and the valve sheet 39 is changed by a damping force adjusting mechanism 42 which adjusts the damping force at the time of the compression side low speed or the extension side low speed. The damping force adjusting mechanism 42 is composed by an adjusting rotor 43, an adjusting dial 44 and an adjusting ball 45.

The adjusting ball 45 is disposed rotatably at a base end section of the adjusting rod 38. The adjusting rotor 43 is disposed rotatably in the metal joint 24 and its rotational position is determined by a clicking mechanism 46. A sloped cam 47, which is in contact with the adjusting ball 45, is formed in the adjusting rotor 43. Further, the adjusting dial 44 is fixed to the adjusting rotor 43.

Accordingly, when the adjusting rotor 43 is rotated by a predetermined angle by rotating the adjusting dial 44, the sloped cam 47 of the adjusting rotor 43 presses the adjusting ball 45, moves the adjusting rod 38 in the axial direction, and changes the area of the flow path of the orifice formed by the needle valve 37 and the valve sheet 39, so that the damping force at the time of the compression side low speed or the extension side low speed is adjusted.

On the outer peripheral surface of the closed end side of the cylinder 12, there is fixedly disposed a reserver chamber 50 for compensating the hydraulic fluid corresponding to the volume change of the piston rod 14 retracted into the cylinder 12 or extended out from the cylinder 12 in the compression or extension process of the shock absorber 10.

The reserver chamber 50 is constituted to divide the inside of a reserver case 51 into a volume compensation fluid chamber 53 and a gas chamber 55 by a bladder 52. The hydraulic fluid is charged into the volume compensation fluid chamber 53, with a nitrogen gas at a pressure of 15 kg/cm², for example, sealed in the gas chamber 55. The volume compensation fluid chamber 53 and the piston-side chamber 28A of the cylinder 12 are communicated with each other by through-holes 56 provided in the cylinder 12. Two through-holes *56* are formed opposite each other in the cylinder 12.

Accordingly, in the compression process of the shock absorber 10, the hydraulic fluid corresponding to the volume of the piston rod 14 retracted into the cylinder 12 flows from the piston-side chamber 28A into the volume compensation fluid chamber 53 of the reserver chamber 50 through the through-holes 56, and the surplus hydraulic fluid within the cylinder 12 is exhausted to the outside of the cylinder 12. Further, in the extension process of the shock absorber 10, the hydraulic fluid corresponding to the volume of the piston rod 14 projected out of the cylinder 12 flows from the volume compensation fluid chamber 53 of the reserver chamber 50 into the piston-side chamber 28A through the through-holes 56, and the negative pressure of the piston-side chamber 28A is cancelled.

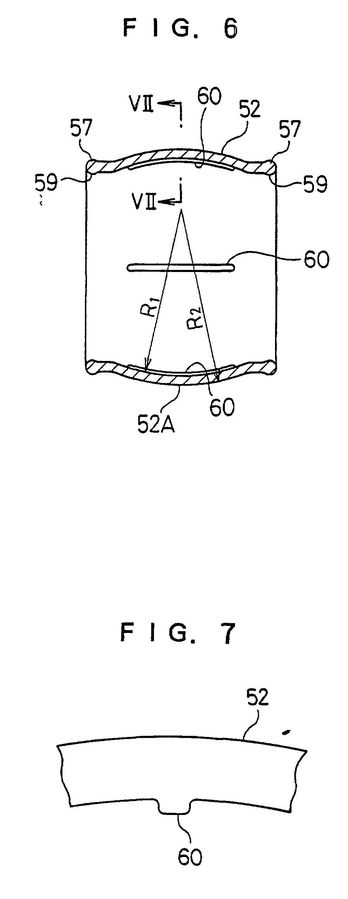

The bladder 52 is made of rubber or a resin having elasticity and is formed in a barrel shape as shown in Fig. 1 and Fig. 6 by vulcanization or injection molding. In the most extended state of the shock absorber 10, the volume compensation fluid chamber 53 formed by the bladder 52 is set in a barrel shape of the molding time (a shape in a standard state) as shown by a solid line in Fig. 1. In an unloaded state when the rider is not on the motorcycle, the volume compensation fluid chamber 53 has a barrel shape as shown by a two-dot chain line in Fig. 1. In the most compressed state of the shock absorber 10, the volume compensation fluid chamber 53 becomes in a barrel shape as shown by a one-dot chain line in Fig. 1.

As shown in Fig. 6, engagement sections 57 are formed with increased thickness at the outer peripheral side at both ends of the bladder 52, and these engagement sections 57 are mounted on an inner peripheral groove 58 of the reserver case 51 so that the bladder 52 is fitted to the reserver case 51. The seal sections 59 are formed with increased thickness at the inner periphery side at both end sections of the bladder 52. The inner diameters of the seal sections 59 are set smaller than the outer diameter of the cylinder 12, and when the reserver chamber 50 is fixed to the outer periphery side of the cylinder 12, the seal sections 59 are brought into contact with the outer peripheral surface of the cylinder 12 to seal the volume compensation fluid chamber 53 in a liquid tight manner. Between the both ends sections of the bladder 52, a compression and extension section 52A (radius R₁, R₂) of almost a constant thickness and having a spherical shape on its outer peripheral surface and inner peripheral surface is formed.

On the inner peripheral surface of the bladder 52, a plurality of ribs 60 extending in the axial direction are provided as shown in Figs. 6 and 7. These ribs 60 are brought into contact with the outer peripheral surface of the cylinder 12 when the volume of the hydraulic fluid within the cylinder 12 becomes depleted and the bladder 52 is compressed in the most extended state of the shock absorber 10 so that the volume compensation fluid chamber 53 cannot maintain the barrel shape, and thus prevent the inner peripheral surface of the bladder 52 from being sucked into the aperture section of the through-holes 56.

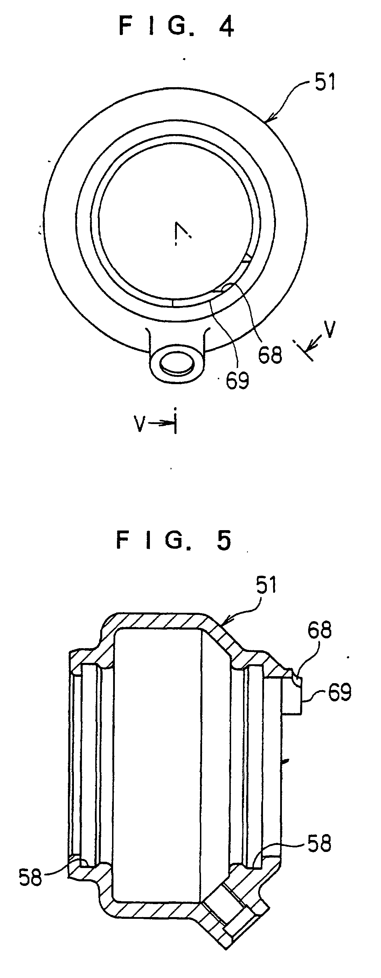

On the other hand, on the outer peripheral surface of the cylinder 12, a ring-shaped groove 61 extending in the direction orthogonal with the axial line of the cylinder 12 by communicating through the two through-holes 56 is formed, as shown in Fig. 3 . Since the size of the ring-shaped groove 61 is formed to be smaller than the outer diameter of the cylinder 12, when the bladder 52 is inserted in the axial direction of the cylinder 12 and the seal sections 59 of the bladder 52 have reached the ring-shaped groove 61, the ring-shaped groove 61 functions to stop the extension of the seal sections 59. Beveling tapers 62 are provided on both sides of the ring-shaped groove 61 to facilitate the movement of the seal sections 59 of the bladder 52 to the inside and outside of the ring-shaped groove 61.

On the outer periphery of the cylinder 12, a stopper section 63 for stopping one end portion of the reserver case 51 is formed and a thick fillet section 64 is provided near the bearings 12A of the closed end side, as shown in Fig. 1. In this thick fillet section 64, a drain hole 65 for communicating to a piston-side chamber 58A is provided, and a drain bolt 66 is inserted and fixed into the drain hole 65 to close the drain hole 65. When the drain bolt 66 is removed, the hydraulic fluid within the cylinder 12 is exhausted from the drain hole 65.

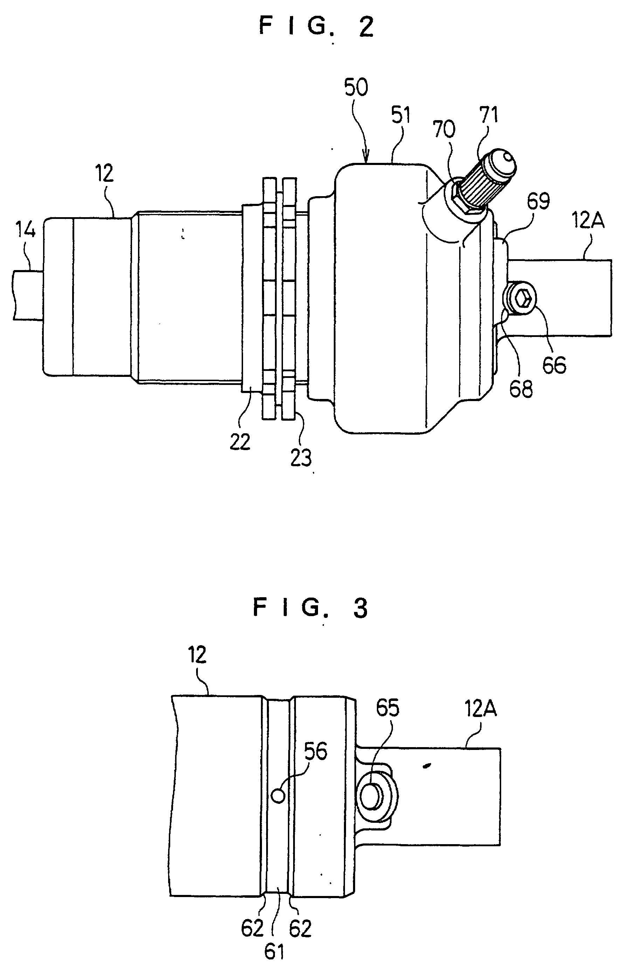

As shown in Figs. 1, 2, 4 and 5, an engagement section 69 having a recess 68 is integrally formed at the other end side of the reserver case 51. One end of the reserver case 51 is stopped by the stopper section 63 of the cylinder 12, and the head section of the drain bolt 66 inserted and fixed into the drain hole 65 is stopped by the recess 68 of the engagement section 69, thus positioning the reserver case 51 in the axial direction and preventing the movement of the reserver case 51. The positioning and the prevention of movement of the reserver case 51 is achieved also by co-operation of the friction of the seal sections 59 of the bladder 52 with the outer peripheral surface of the cylinder 12 caused by contact with each other.

Referring to Fig. 1, reference numeral 70 denotes an air valve and 71 denotes a valve cap. By using the air valve 70, nitrogen gas at a predetermined pressure (for example, 15 kg/cm²) is sealed in the gas chamber 55 of the reserver chamber 50.

An assembling procedure of the shock absorber 10 will now be explained.
(1) At first, the engagement section 57 of the bladder 52 is provided on the inner peripheral groove 58 of the reserver case 51, and the bladder 52 is mounted on the reserver case 51. The reserver case 51 and the bladder 52 in this state are inserted in the axial direction of the cylinder 12 from the closed end side of the cylinder 12 to engage on the outer periphery of the cylinder 12.
(2) Compressed air is sealed within the gas chamber 55 of the reserver chamber 50 from the air valve 71, the bladder 52 is compressed until the inner peripheral surface is closely adhered to the outer peripheral surface of the cylinder 12, and, in this state, the hydraulic fluid is charged into the cylinder 12 from the open end side of the cylinder 12.
(3) Then, the air valve 71 is opened and the pressure inside the gas chamber 55 is set to atmospheric pressure, and the bladder 52 is returned to the approximately barrel shape which is its standard molded state. Then, the hydraulic fluid within the piston-side chamber 28A of the cylinder 12 is absorbed into the volume compensation fluid chamber 53 through the through-holes 56 by the operation of the negative load of the volume compensation fluid chamber 53 at the time when the bladder 52 returns to the standard state, and the hydraulic fluid, with a small mixture of air, fills the volume compensation fluid chamber 53.
(4) Next, the air valve 71 is closed, and then the piston 13, the disk valves 31 and 32, the rod guide 15 and the oil seal 18 are fitted to the piston rod 14, and all of this complete body is inserted into the cylinder 12 by overflowing the hydraulic fluid at the same time from the open end side of the cylinder 12. When an O ring 72 mounted on the rod guide 15 has reached the open end of the cylinder 12, the overflow of the hydraulic fluid from the cylinder 12 is prevented, and from this time, the complete body is further inserted into the cylinder 12. Then, the bladder 52 swells to the standard molded state by the volume of the hydraulic fluid (L x the inner diameter of the cylinder 12) corresponding to the volume from when the O ring 72 of the complete body reaches the open end of the cylinder 12 till when the rod guide 15 is positioned by the stopper ring 16. The complete body may be inserted into the cylinder 12 in the state that the air valve 71 is opened.
(5) Next, the drain bolt 66 is removed from the drain hole 65, the air valve 71 is opened to set the inside of the gas chamber 55 at atmospheric pressure, and the hydraulic fluid within the cylinder 12 is exhausted from the drain hole 65 by the co-operation of the atmospheric pressure within the gas chamber 55 and the tension of the bladder 52 which compresses to the standard molded state. When the bladder 52 has compressed to the standard molded state of the molding time, the exhausting of the hydraulic fluid from the drain hole 65 is finished.
(6) At this time, when the drain bolt 66 is inserted and fixed into the drain hole 65, the quantity of the hydraulic fluid within the cylinder 12 in the longest extended state of the shock absorber 10 is determined.
(7) Lastly, a nitrogen gas is sealed in the gas chamber 55 of the reserver chamber 50 through the air valve 70, and the inside of the gas chamber 55 is set at a predetermined pressure.

According to the above-described mode of the present invention, there are following effects (1) to (10).
(1) Since the reserver chamber 50 is installed on the outer periphery of the cylinder 12 and also since the reserver chamber 50 is disposed parallel to the cylinder 12, the whole length of the shock absorber 10 can be designed to be short even if the shock absorber 10 is a single-tube type. As a result, it is possible to design a short height for the seat of the motorcycle in which the shock absorber 10 is used, and also it is possible to set a larger road clearance for this motorcycle. Accordingly, the present invention is most suitable for a trial bike aimed for a running on a wild road such as a rocky mountain.
(2) Since the volume compensation fluid chamber 53 of the reserver chamber 50 is constituted in a barrel shape in the most extended state of the shock absorber 10, the bladder 52 is not sucked against or into the aperture section of the through-holes 56 formed on the cylinder 12 in this most extended state. Therefore, it is possible to avoid an occurrence of such a phenomenon that the bladder 52 is damaged by a mark of the aperture section made on the inner peripheral surface of the bladder 52 due to the sucking contact of the bladder 52 against by the aperture section of the through-holes 56.
(3) Further, since the volume compensation fluid chamber is secured in the most extended state, the area of the bladder 52 receiving pressure is large at the time of being compressed from the most extended state. Therefore, the durability of the bladder 52 becomes large without a local application of pressure to a portion facing the through-holes 56, unlike the bladder 52 of a right circular cylinder shape which is closely adhered to the outer peripheral surface of the cylinder 12 in the most extended state.
(4) Further, since the bladder 52 is formed in approximately a barrel shape at the time of molding and since the volume compensation fluid chamber 53 is constituted so that the bladder 52 forms that molded barrel shape in the most extended state, the pressure-receiving area becomes larger as compared with the molded state of the bladder of the right circular cylindrical shape for the same volume of the volume compensation fluid and the coefficient of cubic expansion of the bladder 52 becomes smaller so that the durability of the bladder 52 is improved.
(5) Further, since the bladder 52 is in an approximately barrel shape, the pressure resistance becomes larger to enable a high-pressure gas to be sealed in it.
(6) Since the ribs 60 are provided in projection on an inner peripheral surface of the bladder 52, when, for example, the quantity of the hydraulic fluid within the cylinder 12 becomes depleted due to a extended usage of the shock absorber 10 and the volume compensation fluid chamber 53 of the reserver chamber 50 can not maintain the barrel shape at the time of the greatest extension of the shock absorber 10, in this case, even if the bladder 52 tries to have a contact with the outer peripheral surface of the cylinder 12, the projected ribs 60 are brought into contact with the outer peripheral surface of the cylinder 12. As a result, it becomes possible to avoid damage to the bladder 52 or an operational failure of the shock absorber 10 because the inner peripheral surface of the bladder 52 is not sucked into the aperture section of the through-holes 56 of the cylinder 12. Thus, the ribs 60 of the bladder 52 achieve a fail-safe function.
(7) Since the ring-shaped groove 61 passing through the through-holes 56 has a smaller size than the size of the outer peripheral surface of the cylinder 12, at the time of inserting the bladder 52 in the axial direction of the cylinder 12, the expanded size of the seal sections 59 of the bladder 52 is restricted when the seal sections 59 reach the ring-shaped groove 61, and the seal sections 59 are not damaged by the aperture section of the through-holes 56 when passing through the through-holes 56.
(8) The seal sections 59 of the bladder 52 maintain the volume compensation fluid chamber 53 of the reserver chamber 50 in liquid tight manner and are compressed in a radial direction by the reserver case 51 at the same time. The seal sections 59 fix the reserver case 51 to the cylinder 12 by this friction, restrict the movement of the reserver case 51 in the axial direction, and stop the rotation of the reserver case 51. Therefore, by stopping one end portion of the reserver case 51 with the stopper section 63 of the cylinder 12 and by bringing the recess 68 of the engagement section 69 of the other end side into contact with the header of the drain bolt 66 inserted and fixed into the thick fillet section 64 of the cylinder 12, the reserver case 51 can be fixed to the cylinder 12 securely even if there is a single drain bolt 66, so that the fixing structure of the reserver case 51 can be simplified.
(9) Since the bolt for ensuring the fixing of the reserver case 51 is done by the drain bolt 66, the number of parts can be decreased, so that the fixing structure of the reserver case 51 can be simplified.
(10) When the hydraulic fluid is charged into the cylinder 12 and the volume compensation fluid chamber 53 of the reserver chamber 50 by setting the bladder 52 in a standard molded state, the air within the volume compensation fluid chamber 53 is not easily exhausted through the through-holes 56 through which the hydraulic fluid is guided into the volume compensation fluid chamber 53 so that a large quantity of air is easily mixed into the hydraulic fluid guided into the volume compensation fluid chamber 53. In contrast to this, according to the method of the invention, at first, the hydraulic fluid is charged into the cylinder 12 in the state that the bladder 52 is closely adhered to the outer peripheral surface of the cylinder 12, then the bladder 52 is returned to the standard molded state and the hydraulic fluid within the cylinder 12 is guided into the volume compensation fluid chamber 53 by the negative pressure of the volume compensation fluid chamber 53. Therefore, there exists almost no air in the volume compensation fluid chamber 53 before guiding the hydraulic fluid. Thus, it is possible to securely prevent a mixing of air into the hydraulic fluid guided into the volume compensation fluid chamber 53.

In the above-described mode of implementation, description has been made of the case where a plurality of ribs 60 of the bladder 52 are provided in an axial direction. However, one rib may also be provided in projection in a spiral shape on the inner peripheral surface of the bladder 52. Further, in the above-described mode of implementation, description has been made of the case where the shock absorber 10 is applied to a motorcycle, but this may also be applied to an automatic four-wheel vehicle.

As explained above, according to the shock absorber relating to the preferred embodiment of the present invention, it becomes possible to set the whole length of the shock absorber to be short and also it is possible to maintain the operation of the shock absorber 10 in satisfactory conditions and to prevent an occurrence of damage to the bladder that constitutes the reserver chamber.

According to the preferred embodiment of the present invention, it also becomes possible to avoid damage in particular to the seal sections of the bladder that constitutes the reserver chamber.

According to the preferred embodiment of the present invention, it becomes possible to securely fix the reserver case that constitutes the reserver chamber to the cylinder in a simple structure.

According to the preferred method of the present invention for charging hydraulic fluid into the shock absorber, it becomes possible to securely prevent a mixing of air into the hydraulic fluid charged into the volume compensation fluid chamber of the reserver chamber.

Although the invention has been illustrated and described with respect to several exemplary embodiments thereof, it should be understood by those skilled in the art that the foregoing and various other changes, omissions and additions may be made to the present invention without departing from the scope thereof. Therefore, the present invention should not be understood as limited to the specific embodiment set out above but to include all possible embodiments which can be embodied within a scope encompassed by the appended claims.

## Claims

1. A shock absorber (10) of a single-tube type, the shock absorber comprising a cylinder (12) filled with a hydraulic fluid, a piston rod (14) inserted into said cylinder, a piston (13) having a damping force generating mechanism provided at an end section of the piston rod, the inside of said cylinder being divided into a piston-side chamber (28A) and a rod-side chamber (28B) by the piston, and a reserver case (51) fixed to the outer periphery of said cylinder, the inside of said reserver case being divided into an inside volume compensation fluid chamber (53) and an outside gas chamber (55) by a cylindrical bladder (52) to define a reserver chamber (50), said cylinder being formed with through-holes (56) for communicating between said volume compensation fluid chamber of said reserver chamber and said piston-side chamber,
**characterised in that** the said bladder is in a barrel shape in its molded state and said volume compensation fluid chamber (53) of said reserver chamber (50) is structured so that said bladder (52) remains in a barrel shape when said shock absorber is in the most extended state.

2. A shock absorber according to claim 1 wherein there is provided a drain bolt (66) in said cylinder for adjusting the quantity of said hydraulic fluid within said cylinder from the outside.

3. A shock absorber according to claim 1 or 2, wherein said bladder has ribs (60) provided in projection on its inner peripheral surface.

4. A shock absorber according to claim 1, 2 or 3 wherein seal sections (59) of a smaller diameter than the outer diameter of said cylinder are formed on both end sections of said bladder, for sealingly contacting with the outer peripheral surface of said cylinder, and a ring-shaped groove (61) extending in a direction at a right angle with a respect to an axial line of said cylinder through through-holes is formed on the outer peripheral surface of said cylinder.

5. A shock absorber according to any one of claims 1 to 4 wherein a first stopper section (63) for stopping one end section of said reserver case is formed on the outer periphery of said cylinder and a thick fillet section (64) is formed at a closed end side, seal sections having a smaller diameter than the outer diameter of the cylinder are formed in expansion on both ends sections of said bladder, for sealingly contacting the outer peripheral surface of said cylinder, and a second stopper section (68,69) is provided at the other end section of said reserver case for positioning said reserver case in an axial direction and for stopping the movement of said reserver case by being brought into contact with a bolt (66) inserted and fixed into the thick fillet section of said cylinder in a radial direction.

6. A shock absorber according to claim 5 wherein said bolt is a drain bolt for enabling said hydraulic fluid within said cylinder to be exhausted.

7. A method for charging a hydraulic fluid into a shock absorber (10), in which the shock absorber comprises a piston (13) connected to one end portion of a piston rod (14) and having a damping force generating mechanism, the piston being disposed slidably within a cylinder (12), and a reserver chamber (50) is disposed on the outer periphery of said cylinder, the inside of said reserver chamber being divided by a bladder (52) into a volume compensation fluid chamber (53) for communicating to the inside of said cylinder through through-holes (56) and a gas chamber (55),
wherein the method comprises the step of:
said hydraulic fluid is charged into said cylinder and said volume compensation fluid chamber,
the method being **characterised by** the steps of:
(a) at first, said hydraulic fluid is charged into said cylinder both in a state that said gas chamber of said reserver chamber is pressurised and in a state that said bladder is brought into a close contact with the outer peripheral surface of said cylinder, and
(b) next, said hydraulic fluid within said cylinder is guided and charged into said volume compensation fluid chamber through said through-holes by the operation of the negative pressure within said volume compensation fluid chamber (53) when said bladder (52) returns to its barrel-shaped standard molded state when said gas chamber (55) is at atmospheric pressure, the bladder (52) remaining barrel-shaped when the shock absorber (10) is in its most extended state.

## Patentansprüche

1. Stoßdämpfer (10) vom Einrohr-Typ, welcher aufweist: einen Zylinder (12), der mit einem Hydraulikfluid gefüllt ist, eine Kolbenstange (14), die in den Zylinder eingesetzt ist, einen Kolben (13) mit einem Dämpfkraft-Erzeugungsmechanismus, der an einem Endabschnitt der Kolbenstange vorgesehen ist, wobei das Zylinderinnere in eine- kolbenseitige Kammer (28A) und eine stangenseitige Kammer (28B) durch den Kolben unterteilt ist, sowie einen Reserverkasten (51), der am Außenumfang des Zylinders befestigt ist, wobei die Innenseite des Reserverkastens in eine innere Volumenkompensations-Fluidkammer (53) und eine äußere Gaskammer (55) durch eine zylindrische Blase (52) unterteilt ist, um eine Reserverkammer (50) zu bilden, wobei die Zylinderkammer mit durchgehenden Löchern (56) ausgestattet ist, um eine Verbindung zwischen der Volumenkompensations-Fluidkammer der Reserverkammer und der kolbenseitigen Kammer herzustellen,
**dadurch gekennzeichnet, dass** die Blase im geformten Zustand Tonnenform besitzt und die Volumenkompensations-Fluidkammer (53) der Reserverkammer (50) so ausgebildet ist, dass die Blase (52) in einer Tonnenform verbleibt, wenn der Stoßdämpfer sich in seinem am weitesten ausgefahrenen Zustand befindet.

2. Stoßdämpfer nach Anspruch 1, bei welchem ein Abzugsbolzen (66) im Zylinder zur Einstellung der Menge an Hydraulikfluid innerhalb des Zylinders von außen her vorgesehen ist.

3. Stoßdämpfer nach Anspruch 1 oder 2, bei welchem die Blase Rippen (60) aufweist, die aus ihrer inneren Umfangsfläche vorstehen.

4. Stoßdämpfer nach Anspruch 1, 2 oder 3, bei welchem Dichtungsabschnitte (59) von kleinerem Durchmesser als der Außendurchmesser des Zylinders an beiden Endabschnitten der Blase ausgebildet sind, um dichtend die äußere Umfangsfläche des Zylinders zu berühren, und eine ringförmige Nut (61) sich in einer Richtung rechtwinklig bezüglich einer Axiallinie des Zylinders durch über durchgehende Löcher an der äußeren Umfangsfläche des Zylinders ausgebildet ist.

5. Stoßdämpfer nach einem der Ansprüche 1 bis 4, bei welchem ein erster Anschlagabschnitt (63) als Anschlag für einen Endabschnitt des Reserverkastens am Außenumfang des Zylinders ausgebildet ist, und ein dicker Verkleidungsabschnitt (64) auf der Seite des geschlossenen Endes ausgebildet ist, Dichtungsabschnitte mit kleinerem Durchmesser als der Außendurchmesser des Zylinders aus beiden Endabschnitten der Blase vorstehend gebildet sind, um die äußere Umfangsfläche des Zylinders dichtend zu berühren, und ein zweiter Anschlagsabschnitt (68,69) am anderen Endabschnitt des Reserverkastens vorgesehen ist, um den Reserverkasten in Axialrichtung zu positionieren und die Bewegung des Reserverkastens abzustoppen, indem er in Berührung mit einem Bolzen (66) gebracht wird, der in den dicken Verkleidungsabschnitt des Zylinders in einer Radialrichtung eingesetzt und darin befestigt ist.

6. Stoßdämpfer nach Anspruch 5, bei welchem der Bolzen ein Abzugsbolzen ist., um ein Ablassen des Hydraulikfluids innerhalb des Zylinders zu ermöglichen.

7. Verfahren zum Eingeben eines Hydraulikfluids in einen Stoßdämpfer (10) bei welchem der Stoßdämpfer einen Kolben (13) aufweist, der mit einem Endabschnitt einer Kolbenstange (14) verbunden und einen Dämpfungskraft-Erzeugungsmechanismus aufweist, der Kolben gleitend innerhalb eines Zylinders (12) angeordnet ist, und eine Reserverkammer (50) an Außenumfang des Zylinders angeordnet ist, wobei die Innenseite der Reserverkammer durch eine Blase (52) in eine Volumenkompensations-Fluidkammer (53) zur Herstellung einer Verbindung mit der Innenseite des Zylinders durch durchgehende Löcher (56) hindurch und eine Gaskammer (55) unterteilt ist,
wobei das Verfahren den folgenden Schritt umfasst:
das Hydraulikfluid wird in den Zylinder und in die Volumenkompensations-Fluidkammer eingefüllt,
wobei das Verfahren durch die folgenden Schritte gekennzeichnet ist:
(a) zuerst wird das Hydraulikfluid in den Zylinder sowohl in einem Zustand, dass die Gaskammer der Reserverkammer unter Druck gesetzt wird, als auch in einem Zustand eingefüllt, dass die Blase in eine enge Berührung mit der äußeren Umfangsfläche des Zylinders gebracht wird, und
(b) als Nächstes wird das Hydraulikfluid innerhalb des Zylinders geleitet und in die Volumenkompensations-Fluidkammer durch die durchgehenden Löcher mittels der Wirkung des Unterdrucks innerhalb der Volumenkompensations-Fluidkammer (53) eingefüllt, wenn die Blase (52) in ihren tonnenförmigen normalen geformten Zustand zurückkehrt, wenn die Gaskammer (55) unter Atmosphärendruck steht, wobei die Blase (52) tonnenförmig bleibt, wenn der Stoßdämpfer (10) sich in seinem am weitesten ausgefahrenen Zustand befindet.

## Revendications

1. Amortisseur (10) du type à tube unique, l'amortisseur comportant un cylindre (12) rempli d'un fluide hydraulique, et une tige (14) de piston introduite dans ledit cylindre, un piston (13) ayant un mécanisme de génération de force d'amortissement situé à une section extrême de la tige du piston, l'intérieur dudit cylindre étant divisé par le piston en une chambre (28A) côté piston et une chambre (28B) côté tige, et une enveloppe de réservoir (51) fixée à la périphérie extérieure dudit cylindre, l'intérieur de ladite enveloppe de réservoir étant divisé par une vessie cylindrique (52) en une chambre intérieure (53) à fluide de compensation de volume et une chambre extérieure (55) à gaz afin de définir une chambre réservoir (50), ledit cylindre étant formé de façon à présenter des trous traversants (56) pour établir une communication entre ladite chambre à fluide de compensation de volume de ladite chambre réservoir et ladite chambre côté piston,
**caractérisé en ce que** ladite vessie est en forme de tonneau dans son état moulé et ladite chambre (53) à fluide de compensation de volume de ladite chambre réservoir (50) est structurée de manière que ladite vessie (52) conserve une forme de tonneau lorsque ledit amortisseur est dans l'état le plus en extension.

2. Amortisseur selon la revendication 1, dans lequel il est prévu une vis (66) de vidange dans ledit cylindre pour régler depuis l'extérieur la quantité dudit fluide hydraulique à l'intérieur dudit cylindre.

3. Amortisseur selon la revendication 1 ou 2, dans lequel ladite vessie comporte des nervures (60) faisant saillie sur sa surface périphérique intérieure.

4. Amortisseur selon la revendication 1, 2 ou 3, dans lequel des sections (59) d'étanchéité d'un diamètre inférieur au diamètre extérieur dudit cylindre sont formées sur les deux sections extrêmes de ladite vessie, pour établir un contact étanche avec la surface périphérique extérieure dudit cylindre, et une gorge (61) en forme d'anneau s'étendant dans une direction à angle droit par rapport à une ligne axiale dudit cylindre passant par des trous traversants et formée sur la surface périphérique extérieure dudit cylindre.

5. Amortisseur selon l'une quelconque des revendications 1 à 4, dans lequel une première section d'arrêt (63) destinée à arrêter une section extrême de ladite enveloppe de réservoir est formée sur la périphérie extérieure dudit cylindre et une section (64) à congé épais est formée à un côté extrémité fermée, des sections d'étanchéité ayant un diamètre inférieur au diamètre extérieur du cylindre sont formées en expansion sur les deux sections extrêmes de ladite vessie, pour établir un contact étanche avec la surface périphérique extérieure dudit cylindre, et une seconde section d'arrêt (68, 69) est prévue à l'autre section extrême de ladite enveloppe de réservoir pour positionner ladite enveloppe de réservoir dans une direction axiale et pour arrêter le mouvement de ladite enveloppe de réservoir en étant amenée en contact avec une vis (66) introduite et fixée dans la section à congé épais dudit cylindre dans une direction radiale.

6. Amortisseur selon la revendication 5, dans lequel ladite vis est une vis de vidange pour permettre d'évacuer ledit fluide hydraulique de l'intérieur dudit cylindre.

7. Procédé pour charger un fluide hydraulique dans un amortisseur (10), dans lequel l'amortisseur comporte un piston (13) relié à une partie extrême d'une tige (14) de piston et ayant un mécanisme de génération d'une force d'amortissement, le piston étant disposé de façon coulissante à l'intérieur d'un cylindre (12), et une chambre de réservoir (50) est disposée sur la périphérie extérieure dudit cylindre, l'intérieur de ladite chambre de réservoir étant divisé par une vessie (52) en une chambre (53) à fluide de compensation de volume destinée à communiquer avec l'intérieur dudit cylindre à travers des trous traversants (56), et une chambre à gaz (55),
dans lequel le procédé comprend les étapes qui consistent :
à charger ledit fluide hydraulique dans ledit cylindre et ladite chambre à fluide de compensation de volume,
le procédé étant **caractérisé par** les étapes dans lesquelles :
(a) tout d'abord ledit fluide hydraulique est chargé dans ledit cylindre à la fois dans un état dans lequel ladite chambre à gaz de ladite chambre de réservoir est sous pression et dans un état dans lequel ladite vessie est amenée en contact étroit avec la surface périphérique extérieure dudit cylindre, et
(b) ensuite, ledit fluide hydraulique à l'intérieur du cylindre est guidé et chargé dans ladite chambre à fluide de compensation de volume à travers lesdits trous traversants par l'action de la pression négative à l'intérieur de ladite chambre (53) à fluide de compensation de volume lorsque ladite vessie (52) revient vers son état moulé normal en forme de tonneau lorsque ladite chambre à gaz (55) est à la pression atmosphérique, la vessie (52) conservant la forme de tonneau lorsque l'amortisseur (10) est dans son état d'extension maximale.
